# EUROPÄISCHE PATENTSCHRIFT

(11) **EP 2 199 000 B1**
(45) Veröffentlichungstag und Bekanntmachung des Hinweises auf die Patenterteilung: **27.02.2013**
(21) Anmeldenummer: 09010095.9
(22) Anmeldetag: 05.08.2009
(51) Int. Cl.: B23D 47/02

(54) **Werkzeugmaschine, insbesondere Kapp- und Gehrungssäge**
Tool machine, in particular mitre saw and mitre box saw
Machine-outil, notamment scie circulaire et à onglet

(30) Priorität: 18.12.2008 DE 202008016711 U
(43) Veröffentlichungstag der Anmeldung: 23.06.2010
(73) Patentinhaber: Metabowerke GmbH, 72622 Nürtingen (DE)
(72) Erfinder: Meelker, Thomas, 49767 Twist (DE)
(74) Vertreter: Lorenz, Markus

(56) Entgegenhaltungen:
- EP-A2- 1 902 802
- DE-U1-202006 019 495
- US-A- 4 452 117
- US-A1- 2007 113 928

## Beschreibung

Die Erfindung betrifft eine Werkzeugmaschine zur Bearbeitung von Holz, Kunststoff oder Metall, insbesondere ausgeführt als Kapp- und Gehrungssäge insbesondere für die Holzbearbeitung.

Nachfolgend wird als ein besonders bevorzugtes Beispiel einer Werkzeugmaschine der in Rede stehenden Art insbesondere eine Kapp- und Gehrungssäge für die Holzbearbeitung beschrieben. Das dient der einfachen Erläuterung, hat jedoch keine Beschränkung zum Ziel. Die Lehre der Erfindung ist auf das Zusammenwirken eines Trägers, der eine Werkstückauflagefläche bildet, mit einem Zusatzträger, der eine Zusatzfläche für die Werkstückauflage bildet, gerichtet. Diese Problemstellung findet sich bei Werkzeugmaschinen unterschiedlicher Art, wenn auch ganz besonders häufig bei Kapp- und Gehrungssägen als Maschinen für die Holt-, Kunststoff- und Metallbearbeitung.

Eine bekannte Werkzeugmaschine (EP-A-1 902 802) ist eine Kapp- und Gehrungssäge. Diese weist einen Träger auf, mit dem sie auf einer Unterlage, beispielsweise einer Werkbank steht. Bei dieser Kapp- und Gehrungssäge bildet der Träger selbst randseitig seitliche Auflageflächen. In den Träger ist ein um eine Hochachse drehbar gelagerter Drehtisch eingelassen. Zusammen mit den seitlichen Auflageflächen bildet dieser Drehtisch eine Werkstückauflagefläche. Mittig weist die Werkstückauflagefläche im Bereich des Drehtisches einen Eintauchschlitz für den Zahnkranz eines Sägeblattes auf.

Es gibt auch Varianten dieser Kapp- und Gehrungssäge, bei denen der Träger seitlich des Drehtisches auf ein kleines Stück reduziert ist und nur eine geringe oder gar keine Auflagefläche bildet.

Bei der bekannten, zuvor erläuterten Kapp- und Gehrungssäge befindet sich am Drehtisch, der einen Teil des Trägers bildet, eine Halterung für ein Sägeaggregat, das oberhalb der Werkstückauflagefläche angeordnet ist und einen Antriebsmotor sowie ein davon angetriebenes Sägeblatt aufweist. Dieses Sägeaggregat definiert mit der Ebene des Sägeblattes eine Sägeschnittrichtung. Diese findet sich in der Ausrichtung des Eintauchschlitzes in der Werkstückauflagefläche wieder.

Das Sägeaggregat kann an der Halterung um eine Querachse geschwenkt werden, und zwar aus einer angehobenen Ruhestellung in eine abgesenkte Sägestellung und umgekehrt. Mit dieser Bewegung des Sägeblattes kann ein auf der Werkstückauflagefläche befindliches Werkstück abgeschnitten - gekappt - werden.

Zur Fixierung des Werkstückes auf der Werkstückauflagefläche dient ein Werkstückanschlag, der sich in der mittigen Grundstellung des Sägeaggregates bzw. des Drehtisches quer zur Sägeschnittrichtung erstreckt. Damit ist es möglich, das Werkstück "gegen" den Werkstückanschlag zu sägen.

Bei der bekannten, zuvor erläuterten Kapp- und Gehrungssäge ist die Schnittlänge dadurch größer als durch den Durchmesser des Sägeblattes vorgegeben, daß zusätzlich eine Zugfunktion realisiert ist. Das Sägeblatt kann hier das Werkstück nicht nur infolge der Schwenkbewegung um die Querachse durchtrennen, sondern zusätzlich auch infolge einer Verschiebebewegung senkrecht zur Querachse und parallel zur Werkstückauflagefläche. Die bekannte Kapp- und Gehrungssäge ist somit eine kombinierte Kapp-, Gehrungs- und Zugsäge. Sie zeichnet sich weiter dadurch aus, daß der Drehtisch einen kleinen Durchmesser hat, jedoch einen Auslegerarm mit darin fortgesetztem Eintauchschlitz aufweist.

Bei Werkzeugmaschinen der in Rede stehenden Art weist die Werkstückauflagefläche in Sägeschnittrichtung, definiert bei in der mittigen Grundstellung befindlichem Sägeaggregat, eine bestimmte Tiefe und quer zur Sägeschnittrichtung in dieser Position des Sägeaggregates eine bestimmte Breite auf. Das Werkstück kann aber in seinen Abmessungen durchaus wesentlich größer als die zur Verfügung stehende Werkstückauflagefläche, insbesondere wesentlich breiter oder wesentlich tiefer als diese sein. Der Sägeschnitt in einem solch großen Werkstück kann nicht so präzise ausgeführt werden wie man sich das eigentlich wünscht.

In Erkennung des zuvor erläuterten Problems ist bei der bekannten Kapp- und Gehrungssäge, die zuvor beschrieben worden ist, am Träger zumindest an einer Seite, tatsächlich aber an der linken und an der rechten Seite jeweils ein Zusatzträger angebracht, der jeweils eine Zusatzfläche zur Werkstückunterstützung bildet. Hier ist vorgesehen, daß die Zusatzfläche des am Träger angebrachten Zusatzträgers gegenüber dem Träger zwischen einer dem Träger nahen Grundposition und einer vom Träger weitestmöglich entfernten Distanzposition verstellbar, nämlich mittels einer Stangen-Verschiebeführung verschiebbar ist. Die Stangen-Verschiebeführung weist am Zusatzträger mindestens eine Tragstange und am Träger eine die Tragstange verschiebbar aufnehmende Stangenführung auf.

An der Stangenführung sitzt eine Stangenarretierung in Form einer Klemmschraube, die in eine Gewindefassung im Träger eingeschraubt ist. Wird die Klemmschraube angezogen, so ist die Tragstange in der Stangenführung fixiert. Mittels der Stangenarretierung läßt sich die Zusatzfläche des Zusatzträgers in jeder beliebigen Auszugstellung blockieren, indem die Klemmschraube fest angezogen wird. Befmdet sich an der Zusatzfläche des Zusatzträgers auch noch ein Endanschlag für ein Werkstück, so muß die Stangenarretierung sehr präzise sein, da sich ansonsten die damit eingestellte Schnittlänge am Werkstück verändert.

Es hängt von der manuellen Handhabung durch den Benutzer ab, ob die Klemmschraube, die bei dem bekannten Stand der Technik die Stangenarretierung bildet, genug angezogen ist,- um die genaue und belastbare Arretierung des Zusatzträgers zu gewährleisten. Die Lage der Klemmschraube kann dabei auch zu einer geringfügigen Verstellung der Tragstange beim Anziehen der Klemmschraube fuhren. Schließlich ist es bei der Klemmschraube als Stangenarretierung impraktisch, daß man diese Schraube stets lösen und anschließend wieder anziehen muß.

Bekannt sind bei Werkzeugmaschinen der in Rede stehenden Art für solche ausziehbaren Zusatzträger auch Exzenterklemmungen. Diese sind wesentlich unpräziser als Klemmschrauben und daher nur für geringe Genauigkeitsanforderungen ausreichend.

Bekannt ist auch eine Werkzeugmaschine in Form einer Kapp- und Gehrungssäge (US-A-4,452,117), bei der seitliche Zusatzträger an Stangen-Verschiebeführungen vorgesehen sind. Hier ist eine manuell betätigbare, asymmetrisch arbeitende Stangenarretierung vorgesehen, die ein mit einer Tragstange der Stangen-Verschiebeführung zusammenwirkendes Blockierelement in Form eines Klemmblechs und eine Vorspannfeder aufweist, die das Blockierelement an der Tragstange in eine Blockierstellung vorspannt. Durch manuelle Betätigung des Blockierelements entgegen der Kraft der Vorspannfeder wird die Stangenarretierung gelöst und der Zusatzträger mit seiner Tragstange kann verstellt werden. Lässt man das Blockierelement wieder los, so sorgt die Vorspannfeder dafür, dass das Blockierelement an der Tragstange seine Blockierstellung wieder erreicht und die Tragstange blockiert.

Der Lehre der vorliegenden Erfindung liegt das Problem zugrunde, die bekannte Werkzeugmaschine, insbesondere ausgeführt als Kapp- und Gehrungssäge, so auszugestalten und weiterzubilden, daß eine präzise und einfach zu bedienende Stangenarretierung gewährleistet ist.

Die zuvor aufgezeigte Problemstellung ist bei einer Werkzeugmaschine mit den Merkmalen des Oberbegriffs von Anspruch 1 durch die Merkmale des kennzeichnenden Teils von Anspruch 1 gelöst. Bevorzugte Ausgestaltungen und Weiterbildungen sind Gegenstand der Unteransprüche.

Erfindungsgemäß ist bei der Werkzeugmaschine eine asymmetrisch arbeitende Stangenarretierung verwirklicht. Beim Einschieben des Zusatzträgers zurück in die Grundposition wird die Stangenarretierung durch die Kraftbeaufschlagung des Zusatzträgers in Richtung der Grundposition von selbst gelöst. Nach Abschluß der Arbeit mit der Werkzeugmaschine kann man die Zusatzträger also schnell und problemlos in ihre Grundpositionen zurückstellen. Keinerlei besondere Handhabungen sind erforderlich. In der Gegenrichtung jedoch, also in Richtung der Distanzposition, blockiert die Stangenarretierung stets selbsttätig. Hat man also eine bestimmte Position des Zusatzträgers eingestellt, beispielsweise um dort einen Endanschlag für das Werkstück zu definieren, wird die Position des Zusatzträgers verläßlich, genau und fest eingehalten. Erst eine manuelle Betätigung der Stangenarretierung erlaubt deren Lösen.

Mit der erfindungsgemäß asymmetrischen Arbeitsweise der Stangenarretierung bei der erfindungsgemäßen Werkzeugmaschine kommt man zu einer optimalen Handhabung, die im täglichen Betrieb als sehr komfortabel und gleichzeitig präzise empfunden wird.

Im folgenden wird die Erfindung anhand einer lediglich ein bevorzugtes Ausführungsbeispiel darstellenden Zeichnung näher erläutert. In der Zeichnung zeigt
- Fig. 1: in perspektivischer Ansicht eine typische Kapp- und Gehrungssäge als Beispiel einer Werkzeugmaschine der in Rede stehenden Art,
- Fig. 2: einen Teilschnitt durch einen Träger mit Zusatzträger einer Werkzeugmaschine gemäß Fig. 1,
- Fig. 3: den Träger aus Fig. 2 in einer Ansicht von unten,
- Fig. 4: ausschnittweise, auf die wesentlichen Bauteile reduziert, die Stangen-Verschiebeführung am Träger aus Fig. 2 und 3,
- Fig. 5: in perspektivischer Ansicht die Stangenarretierung der StangenVerschiebeführung aus Fig. 4.

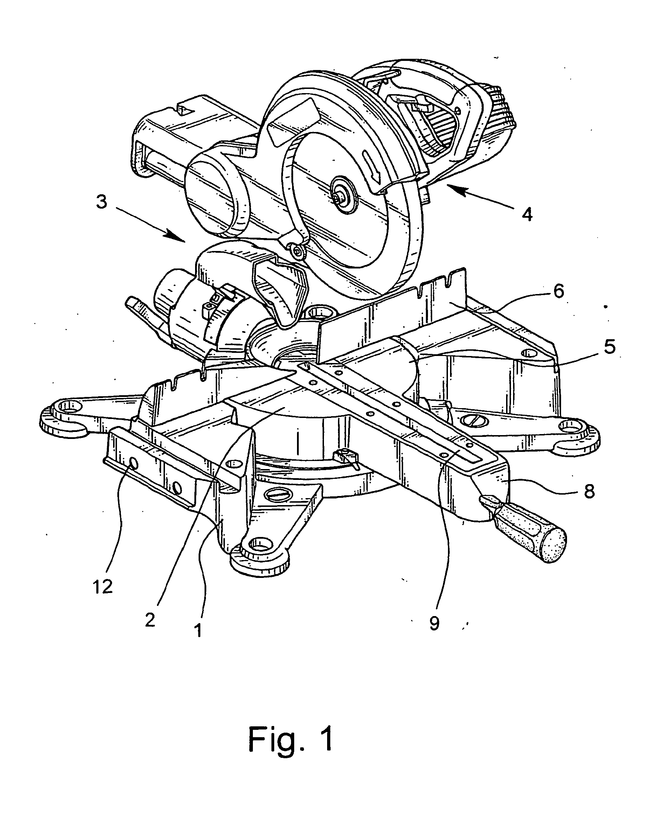

Fig. 1 zeigt den grundsätzlichen Aufbau einer erfindungsgemäßen Werkzeugmaschine, hier an dem bevorzugten Ausführungsbeispiel einer kombinierten Kapp-, Gehrungs- und Zugsäge. Generell gilt die Lehre der Erfindung jedoch für alle Arten von Werkzeugmaschinen mit einem Träger 1, der eine Werkzeugauflagefläche 2 bildet.

Die in Fig. 1 dargestellte Kapp- und Gehrungssäge zeigt einen Träger 1, der eine Werkstückauflagefläche 2 bildet. Am Träger 1 befindet sich eine Halterung 3 für ein oberhalb der Werkstückauflagefläche 2 angeordnetes, eine Sägeschnittrichtung definierendes Sägeaggregat 4.

In der dargestellten Konstruktion ist in den Träger 1 ein Drehtisch 5 eingesetzt, der im Träger 1 um eine Hochachse drehbar gelagert ist. Der Träger 1 zusammen mit dem Drehtisch 5 bildet gemeinsam die Werkstückauflagefläche 2.

Am Träger 1 angebracht ist ein Werkstückanschlag 6, an dem zum Ausführen eines Sägeschnittes ein Werkstück angelegt wird. Der Werkstückanschlag 6 verläuft quer zur Sägeschnittrichtung, wenn man diese bei in der mittigen Grundstellung befindlichem Sägeaggregat 4 (Fig. 1) definiert.

Geht man von dem in Grundstellung befindlichen Sägeaggregat 4 aus, so hat die Werkstückauflagefläche 2 in Sägeschnittrichtung eine bestimmte Tiefe und quer zur Sägeschnittrichtung eine bestimmte Breite.

Im hier dargestellten, besonderen Ausführungsbeispiel der Kapp- und Gehrungssäge mit dem eingelassenen Drehtisch 5 wird eine ausreichende Schnittlänge für das hier in Längsrichtung verschiebbare Sägeaggregat 4 durch den Auslegerarm 8 am Drehtisch 5 gewährleistet. Im Drehtisch 5 und Auslegerarm 8 befindet sich ein Eintauchschlitz 9 für den Zahnkranz des Sägeblattes des Sägeaggregats 4. Der Eintauchschlitz 9 definiert ebenfalls die Sägeschnittrichtung.

Die Unterstützung des Werkstückes 7 auf der Werkstückauflagefläche 2 wird nach vorne hin zusätzlich durch den Auslegerarm 8 gewährleistet, aber eben nur in einem schmalen, mittigen Bereich.

Bereits in Fig. 1 kann man erkennen, daß am Träger 1 zumindest an einer Querseite, tatsächlich an beiden Querseiten, ein eine Zusatzfläche 10 bildender Zusatzträger 11 anbringbar ist, durch den die für die Unterstützung eines Werkstükkes 7 wirksame Breite vergrößerbar ist. In Fig. 1 erkennt man das an den seitlich angedeuteten Steckfassungen 12, in die Tragstangen 13 eines Zusatzträgers 11 eingesteckt werden können.

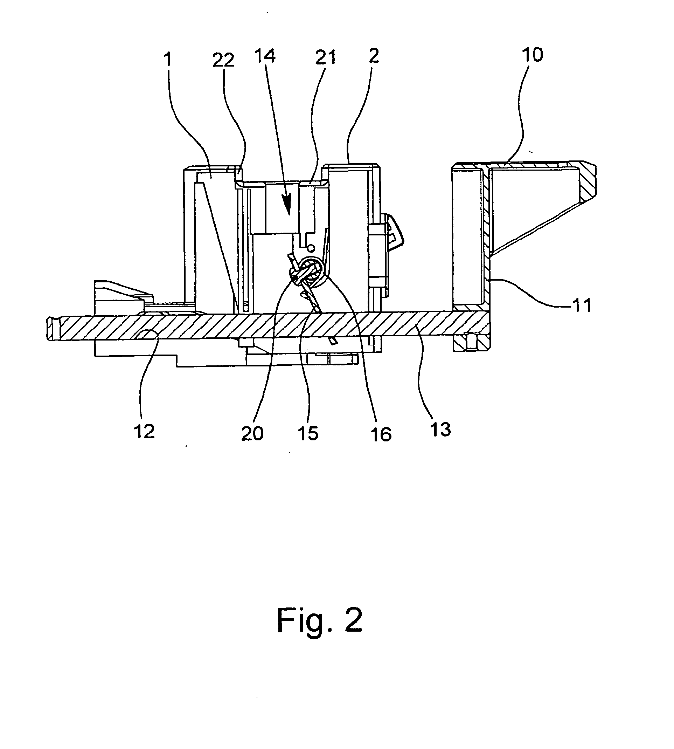

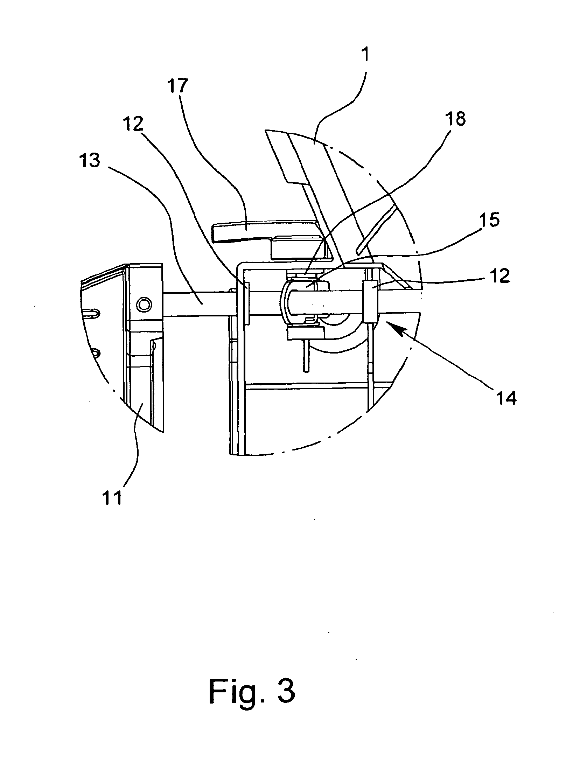

Fig. 2 und 3 zeigen einen Teil des Trägers 1 und darauf ausgebildet die Werkstückauflagefläche 2. Rechts in Fig. 2 und links in Fig. 3 sieht man den Zusatzträger 11. Die Zusatzfläche 10, die vom Zusatzträger 11 gebildet wird, ist in Fig. 2 eingezeichnet. Aus Fig. 2 und 3 erkennt man im Zusammenhang, daß die Zusatzfläche 10 des Zusatzträgers 11 gegenüber dem Träger 1 zwischen einer dem Träger 1 nahen Grundposition und einer vom Träger 1 weitestmöglich entfernten Distanzposition verstellbar ist. Fig. 2 und 3 zeigen eine Position des Zusatzträgers 11 zwischen diesen beiden Extrempositionen.

Die Zusatzfläche 10 des Zusatzträgers 11 vergrößert die wirksame Auflagefläche für ein Werkstück in für die jeweilige Größe des Werkstückes passender Weise. Am Zusatzträger 11 kann auch noch ein Endanschlag für ein Werkstück angeordnet oder ausgebildet sein. Die Position des Zusatzträgers 11 gegenüber dem Träger 1 ist dann auch maßgeblich für die Position des Werkstückes gegenüber dem Sägeaggregat 4 und damit für die Lage des Sägeschnittes im Werkstück.

Fig. 2 und 3 zeigen, daß hier der Zusatzträger 11 am Träger 4 mit Hilfe einer Stangen-Verschiebeführung angebracht ist. Diese weist am Zusatzträger 11 mindestens eine Tragstange 13 und am Träger 1 eine die Tragstange 13 verschiebbar aufnehmende Stangenführung 12 auf. In Fig. 2 und 3 erkennt man rechts jeweils eine Stangenarretierung 14. Erfindungsgemäß arbeitet die Stangenarretierung 14 asymmetrisch. Durch Kraftbeaufschlagung des Zusatzträgers 11 in Richtung der Grundposition, also in Fig. 2 nach links zum Träger 1 hin gerichtet, in Fig. 3 nach rechts zum Träger 1 hin gerichtet, wird die Stangenarretierung 14 selbsttätig gelöst. Bei einer entgegengesetzten Kraftbeaufschlagung hingegen, also in Richtung der Distanzposition, in Fig. 2 nach rechts und Fig. 3 nach links, blokkiert die Stangenarretierung 14 selbsttätig. Sie ist nur durch eine manuelle Betätigung lösbar.

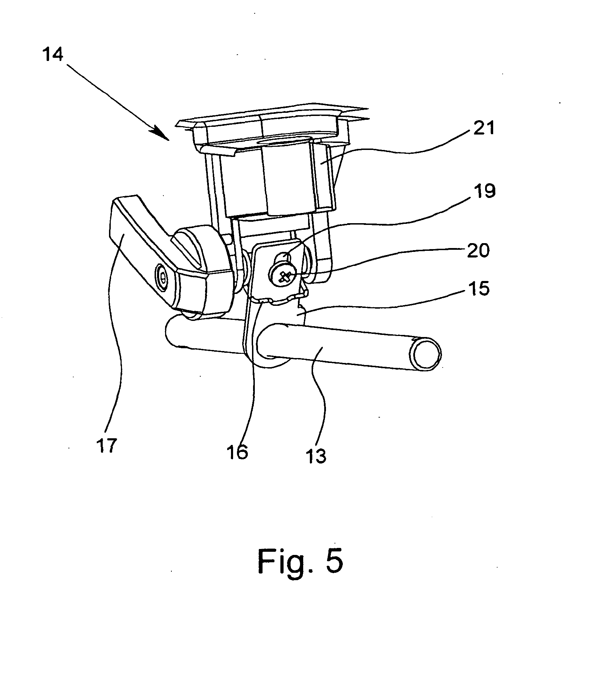

In Fig. 2 und 5 erkennt man besonders gut, daß die Stangenarretierung 14 ein mit der Tragstange 13 zusammenwirkendes Blockierelement 15 und eine Vorspannfeder 16 aufweist, die das Blockierelement 15 an der Tragstange 13 in eine Blokkierstellung vorspannt. In Fig. 2 erkennt man die Vorspannfeder 16 als Schenkelfeder. In Fig. 5 erkennt man, daß die Vorspannfeder 16 als Doppel-Schenkelfeder mit einem Mittelbügel ausgeführt ist, der das Blockierelement 15 überfaßt.

Man kann in Fig. 2 bis 5 gut nachvollziehen, daß die Konstruktion hier so getroffen ist, daß das Blockierelement 15 bei Kraftbeaufschlagung des Zusatzträgers 11 in Richtung der Grundposition entgegen der Federkraft der Vorspannfeder 16 aus der Blockierstellung auslenkbar ist, während das Blockierelement 15 bei einer Kraftbeaufschlagung des Zusatzträgers 11 in Richtung der Distanzposition in der Blockierstellung verharrt oder sich darin noch stärker verkeilt.

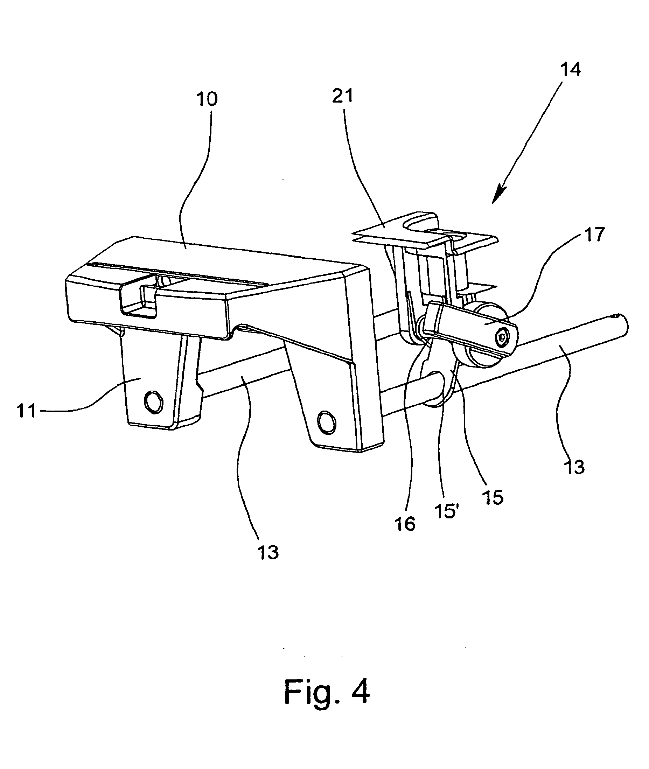

Fig. 2 bis 5 zeigen weiter, daß die Konstruktion der Stangenarretierung 14 besonders einfach und zweckmäßig gewählt worden ist. Vorgesehen ist nämlich, daß das Blockierelement 15 als am Träger 1 schwenkbar gelagertes Klemmblech mit einem Langloch 19 für die Tragstange 13 ausgeführt ist. Verändert sich die Lage des das Blockierelement 15 bildenden Klemmblechs so, daß es weniger schräg zur Tragstange 13 steht, so paßt die Tragstange 13 frei durch das Langloch 19. Sie kann ohne wesentlichen Widerstand verschoben werden. Das geschieht dann, wenn in Fig. 2 diese Verschiebebewegung nach links ausgeführt wird. In Fig. 3 und 4 ist die entsprechende Verschieberichtung nach rechts gerichtet.

Will ein Benutzer jedoch den Zusatzträger 11 mit den Tragstangen 13 weiter in Richtung der Distanzposition, also aus dem Träger 1 herausziehen, so muß er den in Fig. 3, 4, 5 erkennbaren, außen am Träger 1 angebrachten Betätigungshebel 17 nach unten drücken. Entgegen der Federkraft der Vorspannfeder 16 wird dadurch das das Blockierelement 15 bildende Klemmblech senkrechter gestellt.

Solange der Betätigungshebel 17 festgehalten wird kann der Zusatzträger 11 verschoben werden.

Wird der Betätigungshebel 17 losgelassen, so wird das Klemmblech durch die Vorspannfeder 16 in die in Fig. 2 dargestellte Stellung zurückgedrückt und blokkiert die Tragstange 13 wieder.

Fig. 4 läßt erkennen, daß bei den hier vorgesehenen zwei Tragstangen das Blokkierelement 15 der Stangenarretierung 14 an nur einer Tragstange 13 angebracht ist. Das reicht für die Fixierung und Arretierung des Zusatzträgers 11 aus.

Fig. 3 läßt in Verbindung mit Fig. 2 besonders gut erkennen, daß der Betätigungshebel 17 mit dem schwenkbar gelagerten Blockierelement 15 über eine Antriebswelle 18 drehfest verbunden ist.

Schließlich zeigt Fig. 5 noch eine Besonderheit am Blockierelement 15, nämlich ein Langloch 19 mit einer Befestigungsschraube 20. Das als Klemmblech ausgeführte Blockierelement 15 kann sich also mit dem Langloch 19 gegenüber der Antriebswelle 18 etwas verschieben. Dadurch wird die Abstandsveränderung zur Tragstange 13 beim Schwenken des Blockierelements 15 aufgenommen.

Die Fig. 2, 4, und 5 zeigen im übrigen im Zusammenhang, daß die Stangenarretierung 14 insgesamt als eine in den Träger 1 einsetzbare Baugruppe, mit einem Baugruppenträger 21 ausgeführt ist. Dabei läßt Fig. 2 gut erkennen, daß der Baugruppenträger 21 der Stangenarretierung 14 in eine passende Aufnahme 22 im Träger 1 einsetzbar, insbesondere von oben einsteckbar ist.

Im Ergebnis hat die erfindungsgemäße Werkzeugmaschine eine sehr einfach zu bedienende und präzise Stangenarretierung für den Zusatzträger.

## Patentansprüche

1. Werkzeugmaschine, insbesondere ausgeführt als Kapp- und Gehrungssäge, mit einem Träger (1), der eine Werkstückauflagefläche (2) bildet, und mindestens einem an einer Seite des Trägers (1) angebrachten, eine Zusatzfläche (10) bildenden Zusatzträger (11),
wobei die Zusatzfläche (10) des Zusatzträger (11) gegenüber dem Träger (1) zwischen einer dem Träger (1) nahen Grundposition und einer vom Träger (1) weitestmöglich entfernten Distanzposition verstellbar ist und
wobei der Zusatzträger (11) am Träger (1) mit Hilfe einer Stangen-verschiebeführung angebracht ist, die am Zusatzträger (11) mindestens eine Tragstange (13) und am Träger (1) eine die Tragstange (13) verschiebbar auf nehmende Stangenführung (12) sowie eine manuell betätigbare Stangenarretierung (14) aufweist,
wobei die Stangenarretierung (14) ein mit der Tragstange (13) zusammenwirkendes Blockierelement (15) und eine Vorspannfeder (16) aufweist, die das Blockierelement (15) an der Tragstange (13) in eine Blockierstellung vorspannt, wobei die Stangenarretierung (14) asymmetrisch arbeitend ausgebildet ist, nämlich durch eine Kraftbeaufschlagung des Zusatzträgers (11) in Richtung der Grundposition von selbst gelöst wird, hingegen bei einer Kraftbeaufschlagung des Zusatzträgers (11) in Richtung der Distanzposition selbsttätig blockiert und nur durch eine manuelle Betätigung lösbar ist,
das Blockierelement (15) als am Träger (1) schwenkbar gelagertes Klemmblech mit einem Langloch (15') für die Tragstange (13) ausgeführt ist und
das Blockierelement (15) bei Kraftbeaufschlagung des Zusatzträgers (11) in Richtung der Grundposition entgegen der Federkraft der Vorspannfeder (16) aus der Blockierstellung auslenkbar ist, während das Blockierelement (15) bei einer Kraftbeaufschlagung des Zusatzträgers (11) in Richtung der Distanzposition in der Blockierstellung verharrt oder sich darin noch stärker verkeilt.

2. Werkzeugmaschine nach Anspruch 1, **dadurch gekennzeichnet,**
**daß** die Stangenarretierung (14) einen außen am Träger (1) angeordneten Betätigungshebel (17) o. dgl. aufweist.

3. Werkzeugmaschine nach Anspruch 2, **dadurch gekennzeichnet,**
**daß** der Betätigungshebel (17) mit dem schwenkbar gelagerten Blockierelement (15) über eine Antriebswelle (18) drehfest verbunden ist.

4. Werkzeugmaschine nach einem der Ansprüche 1 bis 3, **dadurch gekennzeichnet,**
**daß** bei mehr als einer Tragstange (13) für den Zusatzträger (11) eine Stangenarretierung (14) nur an einer Tragstange (13) vorgesehen ist.

5. Werkzeugmaschine nach einem der Ansprüche 1 bis 4, **dadurch gekennzeichnet,**
**daß** die Stangenarretierung (14) insgesamt als eine in den Träger (1) einsetzbare Baugruppe, vorzugsweise mit einem Baugruppenträger (21), ausgeführt ist.

6. Werkzeugmaschine nach Anspruch 5, **dadurch gekennzeichnet,**
**daß** der Baugruppenträger (21) der Stangenarretierung (14) in eine passende Aufnahme (22) im Träger (1) einsetzbar, insbesondere von oben einsteckbar ist.

## Claims

1. A machine tool, in particular constructed as a mitre and mitre-box saw, having a carrier (1) which forms a workpiece support surface (2) and at least one additional carrier (11) which is mounted on one side of the carrier (1) and forms an additional surface (10),
wherein the additional surface (10) of the additional carrier (11) can be adjusted with respect to the carrier (1) between a basic position which is near to the carrier (1) and a distanced position which is as remote from the carrier (1) as possible and
wherein the additional carrier (11) is mounted on the carrier (1) with the aid of a rod displacement guide which has, on the additional carrier (11), at least one support rod (13) and, on the carrier (1), a rod guide (12), which displaceably receives the support rod (13), and a manually actuable rod-locking device (14), wherein the rod-locking device (14) has a blocking element (15) cooperating with the support rod (13) and a pre-tensioning spring (16) which pre-tensions the blocking element (15) in a blocking position on the support rod (13),
wherein the rod-locking device (14) is constructed to operate asymmetrically, namely it is released automatically as a result of being acted upon by a force of the additional carrier (11) in the direction of the basic position, whereas it is blocked automatically when acted upon by a force of the additional carrier (11) in the direction of the distanced position and can only be released by manual actuation,
the blocking element is constructed as a clamping plate which is pivotally mounted on the carrier (1) and has a slot (15') for the support rod (13) and, when acted upon by a force of the additional carrier (11) in the direction of the basic position, the blocking element (15) can be deflected out of the blocking position in opposition to the spring force of the pre-tensioning spring (16) whereas, when acted upon by a force of the additional carrier (11) in the direction of the distanced position, the blocking element (15) remains in the blocking position or is wedged more firmly therein.

2. A machine tool according to Claim 1, **characterised in that** the rod-locking device (14) has an actuating lever (17) or the like which is arranged externally on the carrier (1).

3. A machine tool according to Claim 2, **characterised in that** the actuating lever (17) is connected in torsion-resistant manner to the pivotally mounted blocking element (15) by way of a drive shaft (18).

4. A machine tool according to one of Claims 1 to 3, **characterised in that**, when there is more than one support rod (13) for the additional carrier (11), a rod-locking device (14) is only provided on one support rod (13).

5. A machine tool according to one of Claims 1 to 4, **characterised in that** the rod-locking device (14) is constructed as a whole as a module which can be inserted into the carrier (1), preferably with a module rack (21).

6. A machine tool according to Claim 5, **characterised in that** the module rack (21) of the rod-locking device (14) can be inserted, particularly inserted from above, into a suitable receiving means (22) in the carrier (1).

## Revendications

1. Machine outil, notamment scie circulaire et scie à onglet, comportant un support (1) qui forme une surface (2) pour poser une pièce à travailler et au moins une surface supplémentaire (10) ajoutée d'un côté du support (1) et constituant un support auxiliaire (11),
où la surface supplémentaire (10) du support auxiliaire (11) est mobile par rapport au support (1), entre une position proche de la position de base du support (1) et une position de préférence aussi distante, éloignée autant que possible du support (1), et
où le support auxiliaire (11) est fixé au support (1) au moyen d'un guidage coulissant à barre, qui comporte au moins une barre d'appui (13) solidaire du support auxiliaire (11) et un organe de guidage de barre (12) coulissant sur la barre d'appui (13) et solidaire du support (1), ainsi qu'un dispositif d'arrêt de barre (14) à fixation manuelle,
où le dispositif d'arrêt de barre (14) comporte un élément de blocage (15) qui coopère avec la barre d'appui (13) et un ressort de précontrainte (16), qui génère une précontrainte sur l'élément de blocage (15) par rapport à la barre d'appui (13) lorsqu'il se trouve dans une position de blocage,
où le dispositif d'arrêt (14) est agencé pour travailler de façon asymétrique, plus précisément la force appliquée au support auxiliaire (11) se libérant automatiquement en direction de la position de base, en revanche, l'application d'une force sur le support auxiliaire (11) en direction de la position éloignée étant bloquée et ne pouvant être libérée que par une action manuelle,
où l'élément de blocage (15) est réalisé sous la forme d'une tôle pliée comportant un trou oblong (15') pour la barre d'appui (13) et liée au support (1) de manière pivotante, et
l'élément de blocage (15), sous application d'une force sur le support auxiliaire (11) en direction de la position de base, à l'encontre de la force ressort du ressort de précontrainte (16) est agencé pour se dégager de la position bloquée, tandis que l'élément de blocage (15), sous application d'une force sur le support auxiliaire (11) en vue d'un déplacement de la position distante vers la position d'arrêt, se durcit et se bloque encore d'avantage.

2. Machine outil selon la revendication 1, **caractérisée en ce,**
**que** le dispositif d'arrêt de barre (14) comporte un levier de commande (17) ou similaire, solidaire du support (1).

3. Machine outil selon la revendication 2, **caractérisée en ce,**
**que** le levier de commande (17) est couplé rigidement en rotation avec l'élément de blocage (15) pivotant, par un arbre d'entraînement (18).

4. Machine outil selon l'une des revendications 1 à 3, **caractérisée en ce que**,
lorsqu'il y a plus d'un support d'appui (13), pour un support auxiliaire (11), un seul arrêt de barre (14) est prévu sur une barre d'appui (13).

5. Machine outil selon l'une des revendications 1 à 4, **caractérisée en ce que**,
l'arrêt de barre (14) est constitué globalement d'un assemblage accessoire pouvant être monté sur le support (1), de préférence avec un support (21) d'assemblage accessoire.

6. Machine outil selon la revendication 5, **caractérisée en ce que**,
le support d'assemblage accessoire (21) de l'arrêt de barre (14) est agencé pour être engagé dans un réceptacle adéquat (22) du support (1), de préférence par emboîtement depuis le haut.
